(19) Europäisches Patentamt

European Patent Office

Office européen des brevets

(11) **EP 1 555 745 B1**

(12) **FASCICULE DE BREVET EUROPEEN**

(45) Date de publication et mention
de la délivrance du brevet:
**09.08.2006 Bulletin 2006/32**

(51) Int Cl.:
***H02M 7/08*** *(2006.01)*

(21) Numéro de dépôt: **04292959.6**

(22) Date de dépôt: **13.12.2004**

(54) **Convertisseur 12 alternances comportant une self de filtrage intégré au redresseur**

12 Halbwellen Konverter mit Filterinduktivität die in der Gleichrichter integriert ist.

12 Pulse converter with filtering inductance being integrated in the rectifier.

(84) Etats contractants désignés:
**DE FR GB**

(30) Priorité: **19.12.2003 FR 0314997**

(43) Date de publication de la demande:
**20.07.2005 Bulletin 2005/29**

(73) Titulaire: **HISPANO SUIZA**
**92700 Colombes (FR)**

(72) Inventeurs:
• **Gazel, Nicolas**
**91450 Soisy sur Seine (FR)**
• **Meuret, Régis**
**78400 Chatou (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**GB-A- 191 027 696       US-A- 5 414 612**
**US-A- 5 455 759**

• **SEWAN CHOI ET AL: "Polyphase transformer arrangements with reduced kVA capacities for harmonic current reduction in rectifier type utility interface." IEEE, 1995, pages 353-359, XP010150581**
• **PATENT ABSTRACTS OF JAPAN vol. 016, no. 192 (E [1199], 11 mai 1992 (1992-05-11) & JP 04 026364 A (TOSHIBA CORP.), 29 janvier 1992 (1992-01-29)**

## Description

<u>Arrière-plan de l'invention</u>

L'invention concerne un convertisseur de 12-alternances (ou 12-pulses), à autotransformateur polyphasé destiné à convertir un réseau de courant alternatif en un réseau de courant continu.

Le domaine d'application est notamment celui des systèmes de commande des moteurs électriques, en particulier pour des équipements à commande électrique dans un aéronef tel que les inverseurs de poussée d'un avion.

Pour de telles applications, il est connu de réaliser un système de commande d'un moteur électrique du type comportant un convertisseur, un onduleur et un filtre d'entrée de l'onduleur.

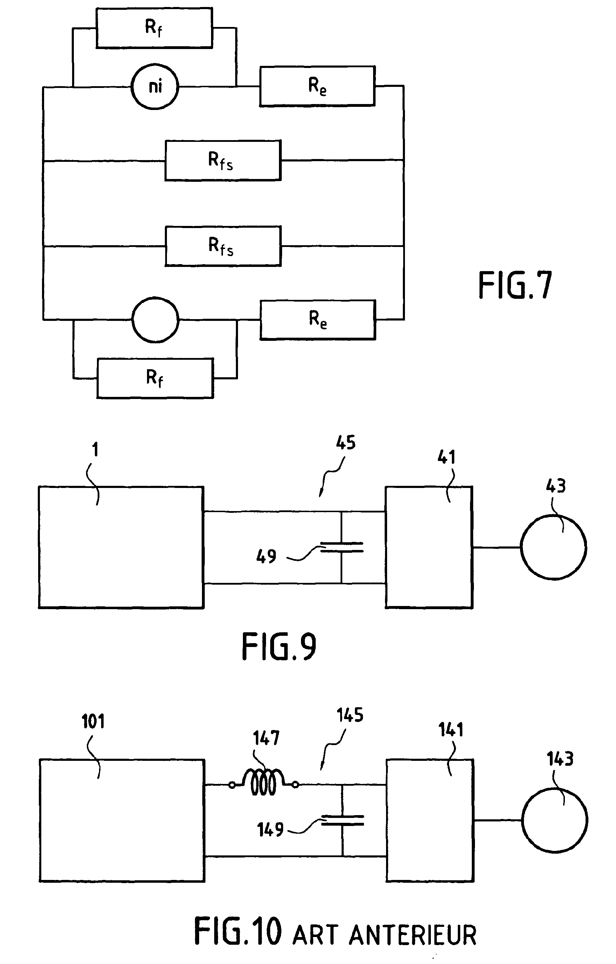

En effet, la figure 10 montre un convertisseur 101 dont la sortie est connectée par l'intermédiaire d'un filtre d'entrée 145 à un onduleur-141, afin de faire varier la vitesse d'un moteur 143 selon les besoins.

Le filtre d'entrée 145 comporte une self de lissage 147 et un condensateur 149. La self de lissage 147 permet de filtrer le réseau de courant continu en sortie du convertisseur 101. Il permet aussi de limiter et de lisser le courant d'appel du condensateur 149 à la mise sous tension. De plus, la self de lissage 147 permet de limiter le rejet harmonique lié à la commutation de l'onduleur 141.

D'une manière générale, le convertisseur comporte un transformateur à disposition polyhase afin de réduire le taux de kVA du transformateur.

En effet, une publication de Choi et al., intitulée «Polyphase Transformer Arrangements with Reduced kVA Capacities for Harmonie Current Reduction in Rectifier-Type Utility Interface », (Vol 11, No. 5) publiée par IEEE en septembre 1996, décrit un convertisseur comportant un autotransformateur ayant un enroulement primaire connecté en triangle et deux enroulements secondaires connectés en étoiles. Les deux enroulements secondaires de l'autotransformateur sont connectés à deux ponts redresseurs dont le fonctionnement en parallèle est assuré par deux selfs d'interphases.

Dans beaucoup d'applications, surtout dans le domaine de l'aérospatial, un problème à résoudre est la réduction du poids et du volume des systèmes de commande des moteurs électriques.

<u>Objet et résumé de l'invention</u>

L'invention a pour but de réaliser un système de commande d'un moteur électrique ayant un poids faible et un volume compact tout en ayant une très bonne fiabilité.

Ce but est atteint grâce à l'utilisation d'un convertisseur 12-alternances comportant un autotransformateur ayant un enroulement primaire connecté en triangle et deux enroulements secondaires connectés en étoiles, les deux enroulements secondaires sont connectés à deux ponts redresseurs dont le fonctionnement en parallèle est assuré par deux selfs d'interphases, le convertisseur comprenant en outre des moyens pour générer un flux de fuite magnétique supplémentaire au niveau d'au moins une self d'interphase de manière à y intégrer une self de lissage.

Ainsi, l'intégration d'une self de lissage au niveau d'au moins une self d'interphase du convertisseur permet de réaliser un système de commande d'un moteur électrique ne comportant pas une self de lissage dans le filtre d'entrée de l'onduleur du système de commande. Ceci permet de réduire le poids, le volume et le coût du système de commande. Il permet aussi de réduire le nombre de connexions et d'augmenter la fiabilité du système de commande.

De préférence, les moyens génèrent un flux de fuite magnétique supplémentaire dans chaque self d'interphase.

Selon un premier mode de réalisation de l'invention, les moyens pour générer un flux de fuite magnétique supplémentaire comprennent un circuit magnétique qui dérive une partie du flux magnétique principal généré par l'au moins une self d'interphase.

Avantageusement, le circuit magnétique peut être constitué d'un des alliages suivants : alliage en fer de silicium, alliage en fer de cobalt, et alliage en matériaux amorphes.

Selon un second mode de réalisation de l'invention, les moyens pour générer un flux de fuite magnétique supplémentaire comprennent un nombre supplémentaire de spires dans une bobine comprise dans l'au moins une self d'interphase.

De préférence, les bobines des selfs d'interphases comportent des fils méplats.

L'invention vise aussi un système de commande d'un moteur électrique comportant un onduleur, et un convertisseur selon l'une des caractéristiques ci-dessus, ledit convertisseur étant couplé audit onduleur par l'intermédiaire d'un condensateur.

<u>Brève description des dessins</u>

L'invention sera mieux comprise à la lecture de la description faite ci-après, à titre indicatif mais non limitatif, en référence aux dessins annexés, sur lesquels :

- la figure 1 est un circuit schématique d'un convertisseur 12-alternance comportant un autotransformateur et des selfs d'interphases,
- la figure 2 illustre plus en détail une self d'interphase de la figure 1,
- la figure 3 illustre un schéma électrique équivalent du convertisseur de la figure 1 et de son réseau d'alimentation,
- la figure 4A est un circuit schématique d'un convertisseur 12-alternance comportant des moyens pour générer un flux de fuite magnétique selon l'invention,
- la figure 4B est une variante de la figure 4A,
- la figure 5 illustre un schéma magnétique équivalent d'une self d'interphase,
- la figure 6 illustre une vue schématique d'un circuit magnétique,
- la figure 7 illustre un schéma magnétique équivalent d'une self d'interphase selon l'invention,
- les figures 8A et 8B illustrent des vues très schématiques d'un circuit magnétique de la figure 7,
- la figure 9 montre très schématiquement un système de commande comportant un onduleur et un convertisseur 12-alternance selon l'invention, et
- la figure 10 montre très schématiquement un système de commande selon l'art antérieur.

Description détaillée de modes de réalisation de l'invention

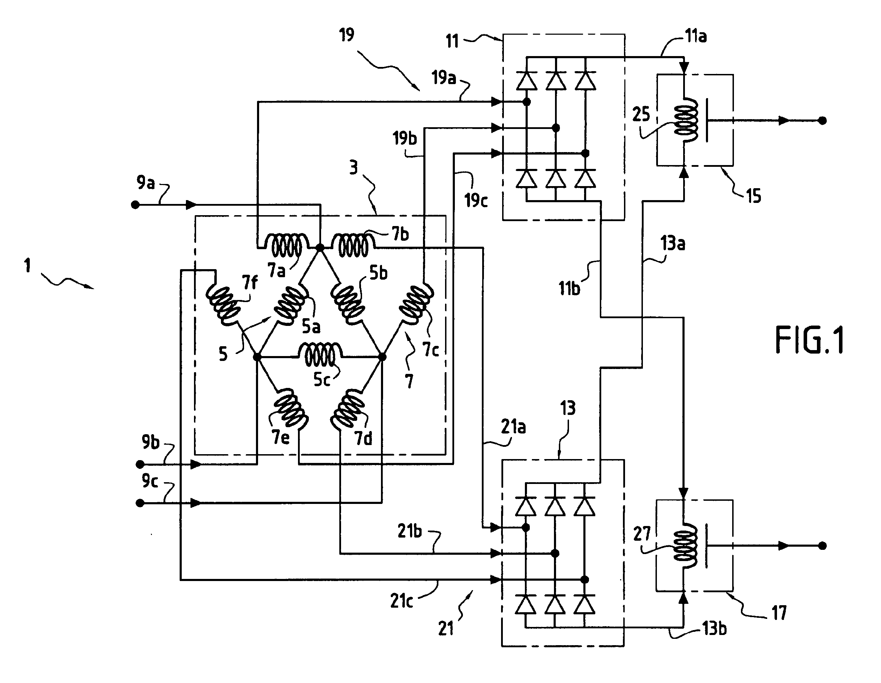

La figure 1 montre très schématiquement un convertisseur 12-alternances 1 comportant un autotransformateur 3 ayant un enroulement primaire 5 connecté en triangle et deux enroulements secondaires 7 connectés en étoiles. L'enroulement primaire 5 comporte les enroulements 5a, 5b, et 5c, tandis que les deux enroulements secondaires 7 comportent les enroulements 7a à 7f.

Les deux enroulements secondaires 7 sont connectés à deux ponts redresseurs 11 et 13, dont le fonctionnement en parallèle est assuré par deux selfs d'interphases 15 et 17.

En effet, l'autotransformateur 3 convertit un réseau triphasé, par exemple un réseau d'alimentation d'un avion, appliqué aux conducteurs 9a, 9b, et 9c, en un premier sous-réseau 19 comportant les conducteurs 19a, 19b, et 19c, et en un second sous-réseau 21 comportant les conducteurs 21a, 21b, et 21c.

Les premier et second sous-réseaux 19 et 21 crées par l'autotransformateur 3 sont déphasés entre eux de 30°. Ils sont respectivement déphasés de +15° et -15° par rapport au réseau triphasé d'entrée.

On notera qu'en introduisant un déphasage de 30° entre les deux sous réseaux 19 et 21, l'autotransformateur opère comme un filtre passif réduisant les $5^{ième}$ et $7^{ième}$ harmoniques du courant du réseau d'alimentation.

Le premier sous-réseau 19 est redressé par le pont redresseur 11, par exemple à l'aide des ponts à six diodes. De même, le second sous-réseau 21 est redressé par le pont redresseur 13.

Les sorties 11a, 11b, 13a, et 13b des ponts redresseurs 11 et 13 sont combinées par les deux selfs d'interphases 15 et 17. En effet, les deux selfs d'interphases 15 et 17 comportent des bobines à points milieux 25, et 27 de sorte que les sorties 11a et 13a sont reliées par la bobine 25 du self d'interphase 15 et les sorties 11b et 13b sont reliées par la bobine 27 du self d'interphase 17.

Ainsi, les deux ponts redresseurs 11 et 13, donnant des ondes de tensions identiques mais déphasées, fonctionnent en parallèle grâce aux selfs d'interphases 15 et 17, pour délivrer une tension redressée d'indice de pulsation égale à 12.

Les bobines 25 et 27 à points milieux des selfs d'interphases 15 et 17, jouent le rôle de diviseur de tension, de sorte que la moyenne des deux tensions redressées par les ponts redresseurs 11 et 13, forme une tension de sortie continue du convertisseur 1.

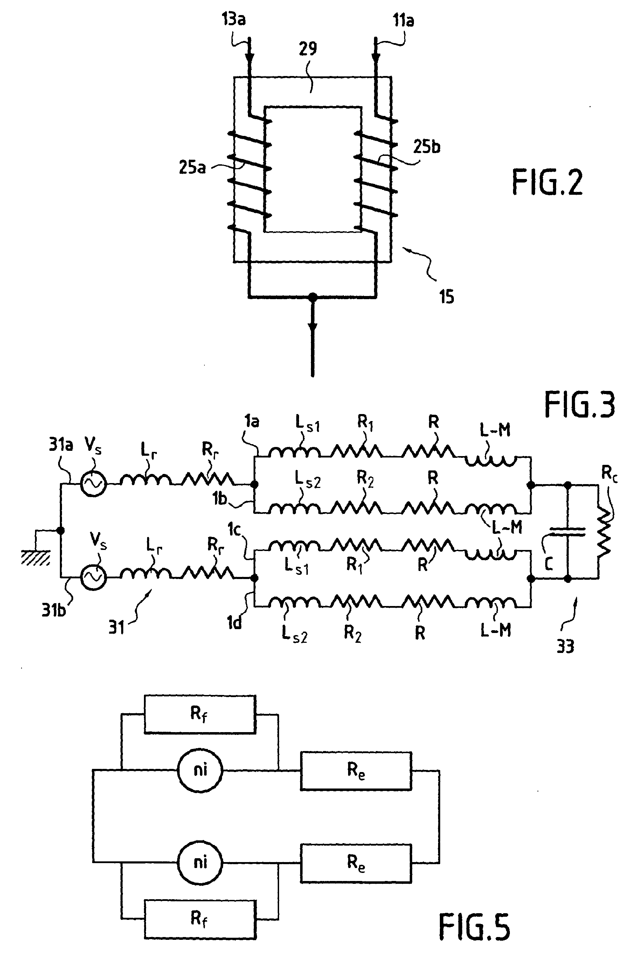

La figure 2 illustre plus en détail une des deux selfs d'interphases de la figure 1, par exemple la self d'interphase 15 sachant que les deux selfs redresseurs sont similaires.

La bobine 25 de la self d'interphase 15 comporte deux enroulements 25a, 25b autour d'un noyau ferromagnétique qu'on appellera dans la suite de la description circuit magnétique 29. L'enroulement 25a ayant une inductance propre $L$ est sur une branche du circuit magnétique 29, tandis que l'enroulement 25b ayant une inductance propre aussi égale à $L$ est sur la branche opposée du circuit magnétique 29, formant ainsi une bobine à point milieu.

Le couplage entre les deux enroulements 25a et 25b engendre pour chaque enroulement, une inductance mutuelle $M$, de sorte que l'inductance de fuite $L_f$ de chaque enroulement est égale à $L - M$, et l'inductance totale $L_T$ de la self d'interphase 15 est égale à $2L+2M$.

Il est connu que, le dimensionnement de chaque self d'interphase 15, 17 est tributaire de la valeur d'un courant de circulation résultant d'une différence entre les courants de sortie des deux ponts redresseurs 11 et 13. Ainsi, la valeur de l'inductance totale $L_T$ peut être déterminer en fonction du taux d'ondulation désiré.

La figure 3 montre un schéma électrique équivalent, à un instant donné, du convertisseur 1 alimenté par un réseau source 31 et débitant dans une charge 33.

Le réseau source 31 délivre une tension alternative dont la valeur efficace est par exemple de l'ordre de 115V, et la fréquence d'entrée est par exemple de l'ordre de 400Hz.

A titre d'exemple, la valeur efficace d'une tension d'entrée d'un réseau avion peut être comprise entre 80V et 180V, et la fréquence d'entrée peut être comprise entre 360Hz et 800Hz.

Ce schéma montre que l'alimentation ou le réseau source 31 est équivalent à deux branches 31a et 31b dont chacune comporte une source de tension alternative *Vs,* une inductance réseau *Lr,* et une résistance réseau *R*$_r$.

Afin de pouvoir intégrer, selon l'invention, une self de lissage dans le convertisseur 1, il est important de considérer que la charge 33 du convertisseur 1 comporte un condensateur. La charge 33 est alors schématisée par une capacité *C* en parallèle à une résistance *Rc*.

Le condensateur de la charge 33 entraîne un phénomène de résonance de fréquence *f*$_r$ au niveau de la sortie du convertisseur 1. Cette fréquence de résonance *f*$_r$ dépend de la capacité C du condensateur ainsi que de l'impédance *L*$_{eq}$ en amont de la charge 33, selon la formule suivante :

$$f_r \simeq \frac{1}{2\pi \sqrt{L_{éq} C}}$$

En outre, pour des questions de filtrage et de lissage de courant, l'inductance de chacune des selfs d'interphases 15, 17 du convertisseur 1 doit être différente de zéro. Alors, il est nécessaire de faire apparaître l'inductance de fuite de chaque self d'interphase 15, 17.

Le convertisseur 1 est schématisé par quatre branches 1a à 1d, dont chacune comporte l'inductance de fuite et la résistance d'un enroulement secondaire 7 de l'autotransformateur 3, ainsi que l'inductance de fuite et la résistance d'un enroulement d'une des selfs d'interphases 15, 17.

Ainsi, chacune des branches 1a et 1c comporte une inductance de fuite *Ls*$_1$ et une résistance *R*$_1$ du premier enroulement secondaire de l'autotransformateur 3, ainsi que l'inductance de fuite *L-M* et la résistance R d'un enroulement de la self d'interphase 15.

De même, chacune des branches 1b et 1d comporte une inductance de fuite *Ls*$_2$ et une résistance *R*$_2$ du second enroulement secondaire de l'autotransformateur 3, ainsi que l'inductance de fuite *L-M* et la résistance R d'un enroulement de la self d'interphase 17.

Par conséquent, l'impédance équivalente *L*$_{eq}$ en amont de la charge 33 est définie par la formule suivante :

$$L_{éq} = 2 \frac{(Ls_1 + L - M)(Ls_2 + L - M)}{Ls_1 + Ls_2 + 2L - 2M} + 2Lr$$

Dans le cas où l'autotransformateur est parfaitement équilibré, c'est-à-dire (*Ls*$_1$ = *Ls*$_2$), alors l'impédance équivalente se réduit à la formule suivante :

$$L_{éq} = Ls_1 + L - M + 2Lr$$

La tension de sortie du convertisseur 1 est une tension continue, par exemple de l'ordre de 270V. Cette tension de sortie est composée d'harmoniques *h*$\times$*f*$_{source}$, *h* étant l'ordre de l'harmonique. Ces harmoniques peuvent coïncider avec la fréquence de résonance f, ce qui a pour conséquence une ondulation accentuée du courant dans le condensateur de la charge à la fréquence *h*$\times$*f*$_{source}$.

Cette ondulation dégrade le contenu harmonique du courant d'entrée du convertisseur 1, car elle fait osciller les courants débités par les deux ponts redresseurs 11, 13. Ainsi, il est nécessaire de placer la fréquence de résonance vers les basses fréquences de manière à ce que le convertisseur 1 soit moins sensible à ce phénomène. Pour cela, il suffit d'augmenter uniquement la valeur de l'inductance équivalente *L*$_{eq}$, car une augmentation de la capacité C, contribuerait à augmenter le courant d'appel.

Le principe selon l'invention, est de se servir des selfs d'interphases 15, et/ou 17, afin d'éviter de rajouter dans la charge 33, une inductance en série avec la capacité *C*.

En effet, en dégradant le coefficient de couplage de l'inductance propre des enroulements d'au moins une des deux selfs d'interphases 15, 17, on génère un flux de fuite magnétique supplémentaire qui augmente la valeur de l'inductance de fuite *L - M*. Cette inductance de fuite supplémentaire s'ajoutera à la valeur de l'inductance équivalente. Alors l'inductance de fuite *L - M* totale de la self d'interphase devient équivalente à une inductance en série avec la

**4**

capacité C.

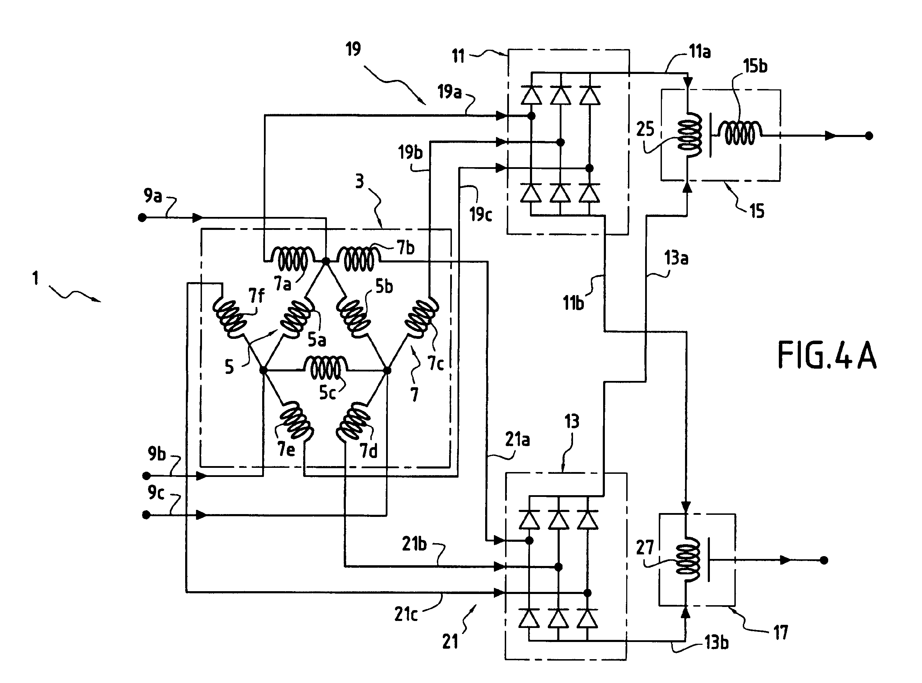

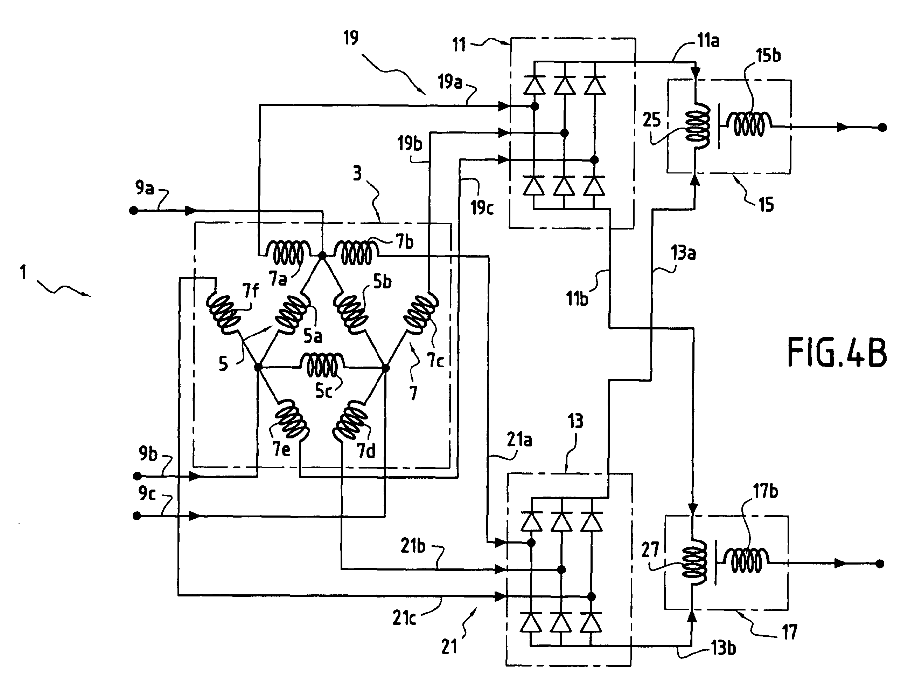

Dans la suite, le convertisseur des figures 4A et 4B est similaire à celui de la figure 1 sauf aux niveaux des selfs d'interphases 15 et 17.

En effet, la figure 4A montre selon l'invention, que le convertisseur 1, comprend en outre des moyens pour générer un flux de fuite magnétique supplémentaire au niveau d'au moins une self d'interphase 15, de manière à y intégrer une self de lissage 15b.

En variante, la figure 4B montre que les moyens génèrent un flux de fuite magnétique supplémentaire dans chaque self d'interphase 15 et 17, de manière à intégrer une self de lissage 15b et 17b dans chaque self d'interphase 15 et 17.

Selon un mode particulier de réalisation de l'invention, les moyens pour générer un flux de fuite magnétique supplémentaire comprennent un nombre supplémentaire de spires dans la bobine 25 ou 27 de l'au moins une self d'interphase 15 ou 17.

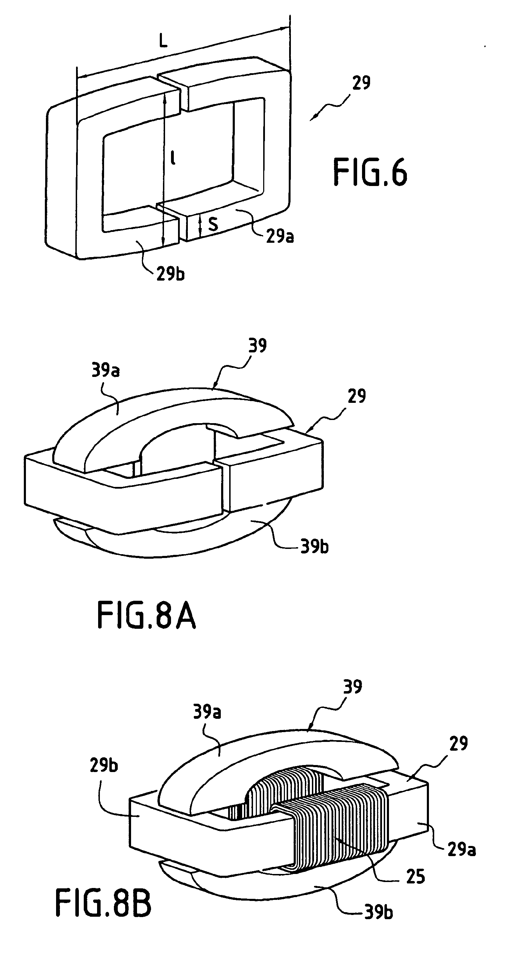

En effet, la figure 5 illustre un schéma du circuit magnétique équivalent d'une self d'interphase, par exemple celui de la figure 2.

Ce circuit magnétique équivalent comprend une réluctance $R_e$ du demi-circuit magnétique incluant la réluctance de l'entrefer du circuit magnétique 29, une réluctance de fuite $R_f$ correspondant à la réluctance équivalente des trajets de flux de fuite de chaque enroulement 25a, 25b, ainsi qu'une force magnétomotrice (ampère-tour) $ni$ de chaque enroulement 25a, 25b ($n$ étant le nombre de spires dans chaque enroulement et $i$ l'intensité du courant dans les enroulements).

Afin de calculer l'inductance de fuite $L_f$, on suppose que les courants à travers les deux enroulements 25a, 25b sont identiques, c'est-à-dire que ces deux enroulements 25a, 25b ont le même ampère-tour $ni$.

Le flux magnétique à travers les réluctances $R_e$ est nul et seuls les flux à travers les deux réluctances de fuite $R_f$ sont différents de zéro.

Ainsi, l'inductance de fuite pour chaque enroulement est donnée par :

$$L_f = L - M = \frac{n^2}{R_f}$$

L'inductance totale de la self d'interphase est alors donnée par :

$$L_T = 2 \cdot L + 2 \cdot M = 2 \cdot \frac{n^2}{R_f} + 2 \cdot \frac{n^2}{R}$$

Par conséquent, en augmentant le nombre de spires n, on peut générer un flux de fuite magnétique supplémentaire qui augmente la valeur de l'inductance de fuite $L - M$.

En outre, afin d'une part de minimiser le poids et le volume et d'autre part d'augmenter le nombre de spires des selfs d'interphases 15, 17, le choix de la forme et de la section du fil utilisé dans les enroulements est important.

Ainsi, les enroulements des selfs d'interphases 15, 17 peuvent comporter des fils méplats permettant d'avoir des bobines plus compactes et plus performantes.

A titre d'exemple, la figure 6 montre le circuit magnétique 29 de la self d'interphase de la figure 2.

Selon cet exemple, le circuit magnétique 29 est formé de deux circuits 29a et 29b en forme de C, de longueur totale L d'environ 51mm, de largeur l d'environ 35mm et de section s d'environ 10mm. Ainsi, une self d'interphase conventionnelle comportant ce type de circuit magnétique et muni de deux enroulements de 30 spires possède une inductance totale 2L+2M d'environ 2mH et une inductance de fuite $L$-$M$ d'environ 0,05mH.

En revanche, en utilisant deux enroulements de 56 spires avec un fil méplat de dimensions 1,25mm fois 3,25mm, l'inductance de fuite $L$-$M$ de chaque enroulement peut atteindre environ 0,2mH.

Etant donné que les deux enroulements d'une self d'interphase sont connectés en parallèle, l'inductance de fuite totale est $\frac{L-M}{2}$, c'est-à-dire d'environ 0,1mH.

Par conséquent, en introduisant une inductance de fuite dans chaque self d'interphase 15, et 17 (voir figure 4B), l'inductance de fuite totale pour les deux selfs d'interphases sera de l'ordre de 0,2mH.

Selon un autre mode particulier de réalisation de l'invention, les moyens pour générer un flux de fuite magnétique supplémentaire comprennent un circuit magnétique qui dérive une partie du flux magnétique principal généré par l'au moins une self d'interphase.

En effet, la figure 7 illustre un schéma magnétique équivalent d'une self d'interphase comportant en plus d'un circuit magnétique principal, un circuit magnétique secondaire.

En effet, le schéma de la figure 7 comporte des réluctances de fuites supplémentaires $R_{fs}$ correspondant à des trajectoires de fuite introduites par un circuit magnétique secondaire, en plus des éléments déjà présents dans le schéma de la figure 5 correspondant au circuit magnétique principal.

Afin de calculer les inductances de fuite, on suppose que les courants à travers les deux enroulements 25a, 25b d'une self d'interphase sont identiques, c'est-à-dire que les deux enroulements 25a, 25b ont le même ampère-tour *ni.*

Le flux dans le circuit magnétique principal n'est plus nul. En effet, un flux de fuite supplémentaire, généré par les forces magnétomotrices de chaque enroulement, se ferme à travers les réluctances $R_e$ et $R_{fs}$.

Dans ce cas, l'inductance de fuite totale $L_{ft}$ pour chaque enroulement est donnée par :

$$L_{f\,t} = L - M = \frac{n^2}{R_f} + \frac{n^2}{R + R_{fs}}$$

En revanche, l'inductance totale de la self d'interphase n'est pas influencée par la présence de circuit magnétique secondaire et s'obtient par la même formule que précédemment :

$$L_T = 2 \cdot L + 2 \cdot M = 2 \cdot \frac{n^2}{R_f} + 2 \cdot \frac{n^2}{R}$$

On notera qu'il est nécessaire de prendre en compte la saturation du circuit magnétique dans le dimensionnement d'une self d'interphase 15, 17. En effet, une saturation du circuit magnétique conduit à une forte diminution de l'inductance totale $L_T$ mettant en cause l'efficacité de la self d'interphase.

Le circuit magnétique principal et/ou secondaire d'une self d'interphase peut être constitué d'un des alliages suivants : alliage en fer de silicium, alliage en fer de cobalt, et alliage en matériaux amorphes.

Bien entendu, il est aussi envisageable d'augmenter le nombre de spires des enroulements et d'ajouter en plus, un circuit magnétique supplémentaire.

A titre d'exemple, la figure 8A montre un circuit magnétique d'une self d'interphase comportant un circuit magnétique principal 29 similaire à celui de la figure 6, et un circuit magnétique secondaire 39 formé de deux circuits magnétiques 39a et 39b en forme de C.

La figure 8B montre une self d'interphase comportant un circuit magnétique principal 29, un circuit magnétique secondaire 39 et des enroulements 25.

Ainsi, selon cet exemple, en ajoutant au circuit magnétique principal 29 un circuit magnétique secondaire 39 (par exemple sensiblement de mêmes forme et dimensions que le circuit principal), et des enroulements à 52 spires (4 couches de 13 spires) autour du circuit principal (voir figure 7B) avec les fils méplats de dimension 1.25mm fois 3.25mm, on obtient une self d'interphase d'inductance de fuite de l'ordre de 0,35 mH, qui est suffisant pour remplacer une self de lissage.

La figure 9 montre un système de commande d'un moteur électrique 43 comportant un onduleur 41 et un convertisseur 1 intégrant une self de lissage engendrée par une inductance de fuite selon les moyens décrits ci-dessus. Le convertisseur 1 est alors couplé à l'onduleur 41 par l'intermédiaire d'un condensateur 49. Il n'est plus nécessaire d'avoir une self de lissage en série avec ce condensateur 49. Ceci permet d'optimiser le poids et le volume du système de commande.

En outre, l'absence d'une self de filtrage à l'entrée de l'onduleur 41 réduit le nombre de bobinage ainsi que le nombre de connexions, ce qui améliore le rendement du système de commande, augmente sa fiabilité et réduit ses coûts.

**Revendications**

**1.** Convertisseur 12-alternances comportant un autotransformateur (3) ayant un enroulement primaire (5) connecté en triangle et deux enroulements secondaires (7) connectés en étoiles, les deux enroulements secondaires (7) sont connectés à deux ponts redresseurs (11, 13) dont le fonctionnement en parallèle est assuré par deux selfs d'interphases (15, 17), **caractérisé en ce qu'**il comprend en outre des moyens comprennent un circuit magnétique (39) qui dérive une partie du flux magnétique principal généré par au moins une self d'interphase (15, 17) pour générer un flux de fuite magnétique supplémentaire au niveau de ladite au moins une self d'interphase (15) de manière à y intégrer une self de lissage (15b).

2. Convertisseur selon la revendication 1, **caractérisé en ce que** lesdits moyens génèrent un flux de fuite magnétique supplémentaire dans chaque self d'interphase (15, 17).

3. Convertisseur selon la revendication 1, **caractérisé en ce que** le circuit magnétique est constitué d'un des alliages suivants : alliage en fer de silicium, alliage en fer de cobalt, et alliage en matériaux amorphes.

4. Convertisseur selon l'une quelconque des revendications 1 à 3, **caractérisé en ce que** lesdits moyens pour générer un flux de fuite magnétique supplémentaire comprennent en outre un nombre supplémentaire de spires dans une bobine (25, 27) comprise dans l'au moins une self d'interphase (15, 17).

5. Convertisseur selon la revendication 4, **caractérisé en ce que** les enroulements des selfs d'interphases (15, 17) comportent des fils méplats.

6. Système de commande d'un moteur électrique (43) comportant un onduleur (41), **caractérisé en ce qu'**il comporte en outre un convertisseur (1) selon l'une quelconque des revendications 1 à 5, ledit convertisseur étant couplé audit onduleur par l'intermédiaire d'un condensateur (49).

**Claims**

1. A 12-pulse converter comprising an autotransformer (3) having a primary winding (5) connected in a delta configuration and two secondary windings (7) connected in star configurations, the two secondary windings (7) being connected to two rectifier bridges (11, 13) that are enabled to operate in parallel by two interphase chokes (15, 17), the converter being **characterised in that** it further comprises means comprising a magnetic circuit (39) shunting a fraction of the main magnetic flux generated by at least one interphase choke (15, 17) to generate an additional magnetic leakage flux at said at least interphase choke (15, 17) so as to incorporate a smoothing choke (15) therein.

2. A converter according to claim 1, **characterised in that** said means generate an additional magnetic leakage flux in each interphase choke (15, 17).

3. A converter according to claim 1, **characterised in that** the magnetic circuit is constituted by one of the following alloys: a silicon iron alloy; a cobalt iron alloy; and an amorphous material alloy.

4. A converter according to any one of claims 1 to 3, **characterised in that** said means for generating an additional magnetic leakage flux further comprise an additional number of turns in a coil (25, 27) included in at least one of the interphase chokes (15, 17).

5. A converter according to claim 4, **characterised in that** the windings of the interphase chokes (15, 17) are made using flat wires.

6. A system for controlling an electric motor (43), the system comprising an inverter (41) and being **characterised in that** it further comprises a converter (1) according to any one of claims 1 to 5, said converter being coupled to said inverter via an intermediate capacitor (49).

**Patentansprüche**

1. 12-Puls-Wandler umfassend einen Autotransformator (3), der eine primäre Wicklung (5) aufweist, die in Dreieckschaltung verbunden ist und zwei sekundäre Wicklungen (7), die in Sternschaltung verbunden sind, wobei die zwei sekundären Wicklungen mit zwei Gleichrichterbrücken (11, 13), deren Betrieb durch zwei Zwischenphasenselbstinduktionsspulen (15, 17) gesichert ist, verbunden sind, **dadurch gekennzeichnet, daß** er ferner Mittel umfaßt, die einen magnetischen Kreislauf (39) umfassen, der einen Anteil des magnetischen Hauptflusses, der von mindestens einer Zwischenphasenselbstinduktionsspule (15, 17) generiert wird, ablenkt, um einen zusätzlichen magnetischen Streufluß auf der Ebene der mindestens einen Zwischenphasenselbstinduktionsspule (15) zu generieren, so daß darin eine Glättungsselbstinduktionsspule (15b) integriert wird.

**2.** Wandler nach Anspruch 1, **dadurch gekennzeichnet, daß** die Mittel einen zusätzlichen magnetischen Streufluß in jeder Zwischenphasenselbstinduktionsspule (15, 17) generieren.

**3.** Wandler nach Anspruch 1, **dadurch gekennzeichnet, daß** der magnetische Kreislauf aus einer der folgenden Legierungen besteht: Siliziumeisenlegierung, Kobalteisenlegierung und Legierung aus amorphen Materialien.

**4.** Wandler nach einem der Ansprüche 1 bis 3, **dadurch gekennzeichnet, daß** die Mittel zur Generierung eines zusätzlichen magnetischen Streuflusses ferner eine zusätzliche Anzahl von Windungen in einer Spule (25, 27) umfassen, die in mindestens einer Zwischenphasenselbstinduktionsspule (15, 17) eingeschlossen ist.

**5.** Wandler nach Anspruch 4, **dadurch gekennzeichnet, daß** die Wicklungen der Zwischenphasenselbstinduktionsspulen (15, 17) abgeflachte Drähte umfassen.

**6.** System zur Steuerung eines elektrischen Motors (43) umfassend einen Wechselstromumrichter (41), **dadurch gekennzeichnet, daß** es ferner einen Wandler (1) nach einem der Ansprüche 1 bis 5 umfaßt, wobei der Wandler mit dem Wechselstromumrichter durch einen Kondensator (49) gekuppelt ist.

FIG.1

EP 1 555 745 B1

FIG.2

FIG.3

FIG.5

FIG.4A

FIG.4B

FIG.6

FIG.8A

FIG.8B

FIG.7

FIG.9

FIG.10 ART ANTERIEUR